# EUROPÄISCHE PATENTANMELDUNG

(11) **EP 3 159 085 A1**
(43) Veröffentlichungstag der Anmeldung: **26.04.2017**
(21) Anmeldenummer: 15190368.9
(22) Anmeldetag: 19.10.2015
(51) Int. Cl.: B23B 51/02, B25D 17/02, G09F 3/04

(54) **WERKZEUG UND HERSTELLUNGSVERFAHREN**

(71) Anmelder: HILTI Aktiengesellschaft, 9494 Schaan (LI)
(72) Erfinder: Grasberger, Stefan, 6800 Feldkirch (AT); Kleine, Werner, 28832 Achim (DE)
(74) Vertreter: Hilti Aktiengesellschaft Corporate Intellectual Property

(57) **Zusammenfassung**

Ein Werkzeug 1 hat einen Werkzeugkopf 2, einen Wendelschaft 3 und ein Einsteckende 4. Der Wendelschaft 3 und das Einsteckende 4 sind in einer Fügezone 20 verbunden, die einen radial überstehenden Wulst 19 aufweist. Ein Aufsatz 21 überdeckt den Wulst 19 und steht radial über das Einsteckende 4 vor.

## Beschreibung

### GEBIET DER ERFINDUNG

Die vorliegende Erfindung betrifft ein Werkzeug, insbesondere einen Bohrer und einen Meißel zum Bearbeiten von Gestein und mineralischen Bauwerkstoffen, und ein Herstellungsverfahren für das Werkzeug.

Die periodische Längsbewegung bei der meißelnden Bearbeitung führt zu einem Transport von Bohrstaub auf der zylindrischen Außenfläche des Einsteckendes, wodurch der Bohrstaub in über einen Werkzeughalter in eine Handwerkzeugmaschine eindringt.

### OFFENBARUNG DER ERFINDUNG

Der erfindungsgemäße Bohrer hat einen Werkzeugkopf für eine meißelnde Bearbeitung von Gestein und mineralischen Bauwerkstoffen, einen Schaft und ein Einsteckende. Der Schaft und das Einsteckende sind in einer Fügezone verbunden, die einen radial vorstehenden Wulst aufweist. Ein radial über das Einsteckende vorstehender Aufsatz überdeckt den Wulst. Der Wulst und der Aufsatz verhindern durch ihren radialen Überstand gegenüber dem Einsteckende, dass der Bohrstaub von den Wendelnuten oder über den glatten Schaft eines Meißels auf die typischerweise zylindrische Außenfläche des Einsteckendes gelangt.

Eine Ausgestaltung sieht vor, dass der Aufsatz aus Kunststoff auf den Wulst geklemmt, aufgeklipst oder aufgespritzt ist. Ein Aufsatz aus Kunststoffaufsatz wirkt thermisch isolierend und ermöglicht ein im Betrieb erhitztes Werkzeug unmittelbar nach Verwendung ohne Verbrennungsgefahr zu wechseln.

Der Aufsatz kann eine Krempe in Richtung zu dem Werkzeugkopf und/oder in Richtung zu dem Einsteckende aufweisen, welche den Staubtransport behindert. Die Krempe bildet einen topfförmigen Aufsatz aus.

Der Aufsatz kann zur Kennzeichnung des Werkzeugs dienen, indem ein Schriftzug und/ oder eine maschinenlesbare Kennung an dem Aufsatz angebracht ist. Auch kann ein Transponder am oder im Aufsatz befestigt sein.

Ein erfindungsgemäßes Herstellungsverfahren für ein Werkzeug sieht die Schritte vor: Schweißen eines Schafts auf ein Einsteckende unter Ausbilden eines radial vorstehenden Wulstes und Aufbringen eines radial über das Einsteckende hinausstehenden Aufsatzes auf den Wulst, wobei der Aufsatz den Wulst abdeckt. Ein Werkzeugkopf für die meißelnde Bearbeitung von Gestein und mineralischen Bauwerkstoffen wird an dem Schaft angearbeitet oder auf dem Schaft befestigt, beispielsweise aufgelötet oder aufgeschweißt.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Bohrer
- Fig. 2: einen Meißel

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

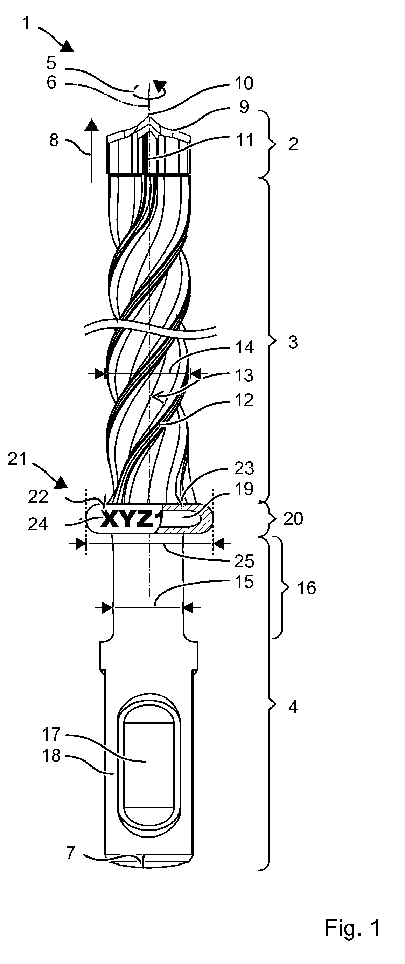

Fig. 1 zeigt einen beispielhaften Bohrer **1**. Der Bohrer **1** hat einen Werkzeugkopf **2**, einen wendelförmigen (Wendel-) Schaft **3** und ein Einsteckende **4**. Der Bohrer **1** ist beispielsweise für den Abbau von mineralischen Werkstoffen, z.B. armiertem Beton, ausgelegt. Der Bohrer **1** wird im Betrieb in einem Drehsinn **5** um seine Längsachse **6** (Werkzeugachse) gedreht. Der Bohrer **1** kann dazu in eine Handwerkzeugmaschine eingesetzt werden, welche einen entsprechenden Drehantrieb aufweist. Ein Schlagwerk der Handwerkzeugmaschine schlägt periodisch auf das freie Ende **7** des Einsteckendes **4**. Die Stoßwelle der Schläge läuft durch den Wendelschaft **3** in Schlagrichtung **8** zu dem Werkzeugkopf **2**. Der Werkzeugkopf **2** zertrümmert den Werkstoff. Die Drehbewegung stellt erstens sicher, dass der Werkzeugkopf **2** unter verschiedenen Orientierungen auf den Untergrund aufschlägt und das Bohrloch gleichmäßig ausgeschlagen wird, und bewirkt zweitens den Abtransport des Bohrguts aus dem Bohrloch mittels des Schafts **3**.

Der beispielhafte Werkzeugkopf **2** hat vier Meißelkanten **9**. Die Meißelkanten **9** laufen an einer Spitze **10** auf der Werkzeugachse **6** zusammen. Die Spitze **10** ist vorzugsweise der in Schlagrichtung **8** höchste Punkt, welche somit beim Bohren zuerst den Werkstoff kontaktiert. Die Meißelkanten **9** können in radialer Richtung von außen zur Werkzeugachse **6** hin längs der Schlagrichtung **8** ansteigen. Die Meißelkanten **9** weisen alle in die Schlagrichtung **8**. Die Meißelkante **9** wird durch jeweils eine im Drehsinn vorauslaufende Facette und eine nachlaufende Facette gebildet, die beide in die Schlagrichtung **8** weisen. Die beiden Facetten sind zueinander geneigt, der Dachwinkel an der Meißelkante **9** ist größer als 45 Grad, vorzugsweise größer 60 Grad und geringer als 120 Grad. Die Meißelkanten **9** können alle gleich ausgestaltet sein, oder paarweise verschieden sein. Der Werkzeugkopf **2** hat vier Abbruchkanten **11**, die parallel zu der Werkzeugachse **6** verlaufen. Die Abbruchkanten **11** gehen in die Meißelkanten **9** über. Die Abbruchkanten **11** definieren den Durchmesser des Werkzeugkopfs **2**. Die Anzahl der Meißelkanten **9** und der Abbruchkanten **11** kann in Abhängigkeit des Durchmessers des Bohrers **1** gewählt sein. Beispielsweise kann bei einem Bohrer **1** geringen Durchmessers der Werkzeugkopf **2** zwei Meißelkanten **9**, ein Werkzeugkopf **2** großen Durchmessers mehr als vier Meißelkanten **9** und entsprechende Zahl von Abbruchkanten **11** aufweisen. Der Werkzeugkopf **2** ist vorzugsweise aus einem gesinterten Werkstoff, insbesondere Wolframkarbid, hergestellt. Die Meißelkanten **9** und die Abbruchkanten **11** sind vorzugsweise monolithisch zusammenhängend, insbesondere ohne Fügezone miteinander verbunden.

Der Wendelschaft **3** des Bohrers **1** hat beispielsweise vier Wendelstege **12.** Die Anzahl der Wendelstege **12** ist vorzugsweise gleich der Anzahl der Meißelkanten **9.** Die Wendelstege **12** laufen längs der Werkzeugachse **6** mehrfach um diese Werkzeugachse **6** um. Die Wendelstege **12** beschreiben beim Drehen des Bohrers **1** eine zylindrische Einhüllende. Jeweils benachbarte Wendelstege **12** schließen zwischen sich eine Wendelnut **13** ein, die in radialer Richtung durch die Einhüllende als geometrisch begrenzt angesehen wird. Das Bohrgut wird in den Wendelnuten **13** durch die Wendelstegen **12** längs der Werkzeugachse **6** transportiert. Der Wendeldurchmesser **14** des Bohrers **1** ist typischerweise gleich oder etwas geringer wie der Durchmesser des vom Werkzeugkopfs **2** erzeugten Bohrlochs.

Das Einsteckende **4** ist im Wesentlichen ein Rundstab, der einen konstanten gleichbleibenden Durchmesser **15** oder wie beispielhaft dargestellt angrenzenden an den Wendelschaft **3** einen verjüngten zylindrischen Abschnitt **16** mit dem Durchmesser **15** aufweist. Letzteres ist insbesondere bei Bohrern **1** mit einem kleinen Wendeldurchmesser **24** üblich. Das Einsteckende **4** kann für den meißelnden Bohrer **1** eine längliche Nut **17** aufweisen, die in und entgegen der Schlagrichtung **8** geschlossen ist. Der Bohrer **1** kann ferner eine weitere längliche Nut **18** aufweisen, die entgegen der Schlagrichtung **8** offen sind, welche zum Übertragen eines Drehmoments auf den Bohrer **1** genutzt werden können.

Der Wendelschaft **3** und das Einsteckende **4** werden vorzugsweise separat hergestellt und anschließend aufeinander gefügt. Während der Durchmesser **15** des Einsteckendes **4** an die wenigen standardisierten Durchmesser für die Werkzeughalter der meißelnden Bohrmaschinen angepasst werden muss, gibt es eine deutliche größere Vielfalt an Durchmessern des wendelförmigen Schafts **3** für unterschiedliche große Bohrdurchmesser. Die separate Herstellung von Wendelschaft **3** und Einsteckende **4** ermöglicht die zugehörigen Rohlinge mit unterschiedlichem Durchmesser auszuwählen, insbesondere können deren Querschnittsflächen unterschiedlich sein. Der wendelförmige Wendelschaft **3** wird vorzugsweise durch ein Walzverfahren aus einem zylindrischen Rohling oder einem Draht hergestellt. Die verwendeten Walzverfahren können den Rohling längs oder quer zu dessen Längsachse walzen, um die Wendelstege **12** herzustellen. Das Einsteckende **4** wird aus einem zylindrischen Rohling hergestellt. Die Nuten **17**, **18** können unter anderem spanend hergestellt oder gepresst werden.

Der Wendelschaft **3** und das Einsteckende **4** werden miteinander verschweißt. Ein für die dauerhafte Anbindung des Einsteckendes **4**, insbesondere in Hinblick auf die Schlagbelastung bevorzugtes Schweißverfahren, ist das Reibschweißverfahren. Das Schweißen wird derart durchgeführt, dass nach dem Schweißen ein Wulst **19** in der Fügezone **20** zwischen dem Wendelschaft **3** und dem Einsteckende **4** entsteht. Der Wulst **19** besteht aus dem gleichen Material wie der Wendelschaft **3** und das Einsteckende **4**, typischerweise aus Stahl. Der Wulst **19** steht radial über das Einsteckende **4** oder bei einem Einsteckende **4** mit verjüngtem Abschnitt zumindest über den an den Wendelschaft **3** angrenzenden zylindrischen Abschnitt **16** des Einsteckendes **4** vor. Vorzugsweise steht der Wulst **19** auch über den Wendelschaft **3** hinaus. Der Wulst **19** hat typischerweise keine gleichmäße, insbesondere keine dem Bohrer **1** entsprechende rotationssymmetrische Form. Dennoch kann der bei dem Herstellungsverfahren entstehende Wulst **19** unbearbeitet belassen werden, insbesondere nicht spanend entfernt werden.

Ein Aufsatz **21** aus Kunststoff wird auf den Wulst **19** aufgespritzt. Der Aufsatz **21** ist ringförmig und umgibt den Umfang des Wulsts **19**. Vorzugsweise überdeckt der Aufsatz **21** den Wulst **19** vollständig. Der Umfang **22** des Aufsatzes **21** kann zylindrisch sein, eine dem Werkzeugkopf **2** zugewandte Stirnfläche **23** des Aufsatzes **21** kann senkrecht zu der Werkzeugachse **6** sein. Auf dem Umfang **22** oder der Stirnfläche **23** kann ein Schriftzug **24** aufgebracht sein, welcher vorzugsweise den Bohrer **1** charakterisiert. Beispielsweise kann der Schriftzug **24** den Durchmesser des vom Werkzeugkopf **2** erzeugten Bohrlochs (Bohrerdurchmesser) oder die Länge des Bohrers **1** angeben. Der unbehandelte Wulst **19** hat eine ausreichend raue Oberfläche, welche ein Anspritzen ermöglicht. Ein Außendurchmesser **25** des Aufsatzes **21** ist größer als der Durchmesser **15** des Einsteckendes **4** und kann größer als der Wendeldurchmesser **14** sein. Der Aufsatz **21** kann vorteilhafterweise einen unerwünschten Transport von Bohrgut von dem Wendelschaft **3** über das Einsteckende **4** in den Werkzeughalter unterbinden.

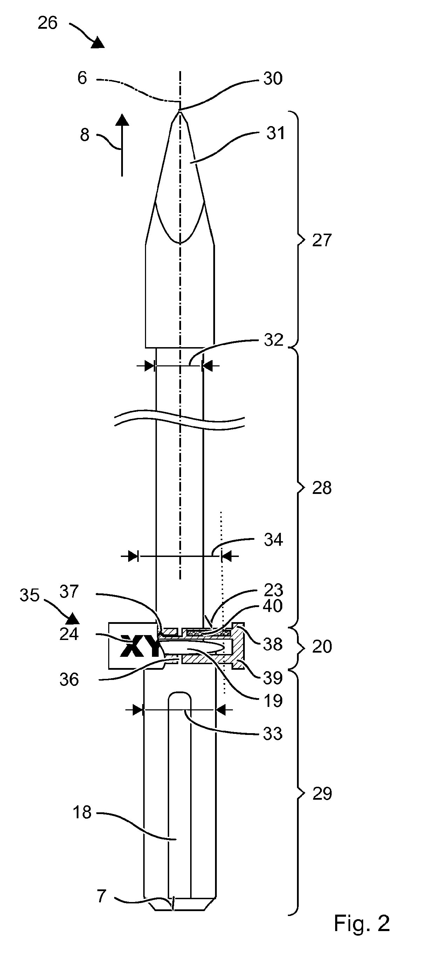

Fig. 2 zeigt einen Meißel **26**, hier beispielsweise einen Spitzmeißel. Der Meißel **26** hat auf einer Werkzeugachse **6** angeordnet einen Werkzeugkopf **27,** einen Schaft **28** und ein Einsteckende **29**. Der Werkzeugkopf **27** ist zum Bearbeiten von Naturstein oder mineralischen Bauwerkstoffen wie Beton, Zement etc. ausgelegt. Der beispielhafte Werkzeugkopf **2** hat zu einer Spitze **30** zusammenlaufende Facetten **31.** Alternative Ausführungen eines Werkzeugkopfs **27** für den Meißel können eine breite Kante (Flachmeißel), mehrere Spitzen etc. aufweisen. Ein Schlagwerk einer Handwerkzeugmaschine schlägt periodisch auf das freie Ende **7** des Einsteckendes **29**. Die Stoßwelle der Schläge läuft durch den Schaft **28** in Schlagrichtung **8** zu dem Werkzeugkopf **27**.

Der Schaft **28** kann eine zylindrische oder prismatische Form mit einem gleichbleibenden Querschnitt längs der Werkzeugachse **6** aufweisen. Ein Durchmesser **32** oder Abmessung quer zu der Werkzeugachse **6** des Schafts **3** ist entsprechend konstant.

Das Einsteckende **29** kann gleich wie das Einsteckende **4** des zuvor beschriebenen Bohrers **1** ausgebildet sein. Das Einsteckende **4** kann alternativ zylindrisch oder prismatisch, z.B. mit einem hexagonalen Querschnitt, ausgebildet sein. Das Einsteckende **4** hat beispielsweise einen gleichbleibenden Durchmesser **33**.

Das Einsteckende **29** ist mit dem Schaft **28** verschweißt, wodurch eine Fügezone **20** zwischen dem Einsteckende **29** und dem Schaft **28** ausgebildet ist. Das verwendete Schweißverfahren ist vorzugsweise ein Reibschweißverfahren. Ein Wulst **19** ist in der Fügezone **20** ausgebildet und ragt radial vor. Ein Durchmesser **34** des Wulsts **19** ist größer als der Durchmesser **33** des Einsteckendes **29**.

Ein Aufsatz **35** ist auf dem Wulst **19** angeordnet. Der Aufsatz **35** ist mechanisch an dem Wulst **19** befestigt. Der beispielhafte Aufsatz **35** ist ein Ring mit einem Schlitz **36**. Der Schlitz **36** kann mittels einer Zange oder ähnlichem Werkzeug geweitet werden, um den Aufsatz **35** über den Wulst **19** zu ziehen. Der Schlitz **36** schließt sich beispielhaft durch eine Federwirkung des Aufsatzes **35** oder wird durch ein Werkzeug zugedrückt. Der Aufsatz **35** ist entsprechend an dem Wulst **19** angeklemmt. Eine Verriegelung **37** kann ein unerwünschtes Öffnen des Aufsatzes **35** verhindern. Beispielshaft hat die Verriegelung **37** einen von einer Seite des Schlitzes **36** zu der anderen Seite des Schlitzes **36** reichenden Arm, welcher auf der anderen Seite mittels eines Hakens eingreift. Eine weitere Ausgestaltung sieht vor, den Aufsatz **21** aus zwei Schalen zu bilden, welche durch eine oder mehrere solche Verriegelungen **36** zusammengehalten sind.

Der beispielhafte Aufsatz **35** hat eine zur Spitze **30** weisende Krempe **38**. Die durch die Krempe **38** gebildete Topfform behindert effektiv den Transport von Staub. Ferner kann eine Krempe **39** zu dem Einsteckende **29** hinweisen. Der Staub wird von der zweiten Krempe **39** abgeschüttelt, bevor der Staub auf das Einsteckende **29** kriechen kann.

Der beispielhafte Aufsatz **35** kann eine maschinenlesbare Kennzeichnung enthalten. Beispielsweise ist in den Aufsatz **35** ein Transponder **40** integriert.

## Patentansprüche

1. Werkzeug (1, 26) mit einem Werkzeugkopf (2, 27) zum Bearbeiten eines Werkstücks, insbesondere zum meißelnden Bearbeiten eines Werkstücks aus Gestein und mineralischen Bauwerkstoffen, einem Schaft (3, 28) und einem Einsteckende (4, 29), wobei eine den Schaft (3, 28) und das Einsteckende (4, 29) verbindende Fügezone (20) einen radial vorstehenden Wulst (19) aufweist und einen den Wulst (19) überdeckenden radial über das Einsteckende (4, 29) vorstehenden Aufsatz (21, 35) aufweist.

2. Werkzeug (1, 26) nach Anspruch 1, **dadurch kennzeichnet, dass** der Aufsatz (21, 35) aus einem synthetischen Polymer und/oder einem natürlichen Polymer ist.

3. Werkzeug (1, 26) nach Anspruch 1 oder 2, **dadurch gekennzeichnet, dass** der Aufsatz (21, 35) an dem Wulst (19) befestigt ist.

4. Werkzeug (1, 26) nach Anspruch 3, **dadurch gekennzeichnet, dass** der Aufsatz (21, 35) den Wulst (19) ringförmig umschließt.

5. Werkzeug (1, 26) nach Anspruch 3 oder 4, **dadurch gekennzeichnet, dass** der Aufsatz (21, 35) einen in Umfangsrichtung verrastenden Verschluss (37) aufweist.

6. Werkzeug (1, 26) nach Anspruch 3 oder 4, **dadurch gekennzeichnet, dass** der Aufsatz (21, 35) unter mechanischer Vorspannung an den Wulst (19) angeklemmt ist.

7. Werkzeug (1, 26) nach Anspruch 3 oder 4, **dadurch gekennzeichnet, dass** der Aufsatz (21) auf den Wulst (19) aufgespritzt ist.

8. Werkzeug (1, 26) nach einem der vorhergehenden Ansprüche, **gekennzeichnet durch** eine zu dem Werkzeugkopf (2) weisende Krempe (38) an dem Umfang (22) des Aufsatzes (21).

9. Werkzeug (1, 26) nach einem der vorhergehenden Ansprüche, **gekennzeichnet durch** eine zu dem Einsteckende (4) weisende Krempe (39) an dem Umfang (22) des Aufsatzes (21).

10. Werkzeug (1, 26) nach einem der vorhergehenden Ansprüche, **dadurch gekennzeichnet, dass** ein Umfang (22) des Aufsatzes (21) mit das Werkzeug (1, 26) kennzeichnenden Angaben beschriftet ist.

11. Werkzeug (1, 26) nach einem der vorhergehenden Ansprüche, **dadurch gekennzeichnet, dass** eine maschinenlesbare Kennzeichnung des Werkzeugs an dem Aufsatz (21) vorgesehen ist.

12. Werkzeug (1, 26) nach Anspruch 11, **dadurch gekennzeichnet, dass** ein Transponder (40) in den Aufsatz (21) eingebettet ist.

13. Herstellungsverfahren für ein Werkzeug (1, 26) mit den Schritten Schweißen eines Schafts (3, 28) auf ein Einsteckende (4, 29) unter Ausbilden eines radial überstehenden Wulstes (19), Aufbringen eines Aufsatzes (21, (35) auf den Wulst (19), wobei der Aufsatz (21, 35) den Wulst (19) überdeckt und radial über das Einsteckende (4, 29) vorsteht.

14. Herstellungsverfahren nach Anspruch 13, **dadurch gekennzeichnet, dass** der Aufsatz (21, 35) auf den Wulst (19) aufgeklipst oder aufgespritzt wird.
